# EUROPÄISCHE PATENTANMELDUNG

(11) **EP 0 980 810 A1**
(43) Veröffentlichungstag der Anmeldung: **23.02.2000**
(21) Anmeldenummer: 99113185.5
(22) Anmeldetag: 08.07.1999
(51) Int. Cl.: B62B 7/06

(54) **Zwillings- oder Geschwisterkinderwagen**

(30) Priorität: 20.08.1998 DE 29814902 U
(71) Anmelder: BRITAX-TEUTONIA KINDERWAGENFABRIK GmbH, D-32120 Hiddenhausen (DE)
(72) Erfinder: Götting, Bernd, 32130 Enger (DE)
(74) Vertreter: Stracke, Alexander, Dipl.-Ing.

(57) **Zusammenfassung**

Ein Zwillings- oderGeschwisterkinderwagen mit einem Untergestell, an dem ein Schiebebügel angelenkt ist und an dem außerdem die Vorder- und Hinterräder gelagen sind und an dem darüberhinaus zwei Sitz- und Liegeeinsätze abnehmbar festgelegt sind, soll so gestaltet werden, daß unter Beachtung der einschlägigen Sicherheitsbestimmungen eine kompakte Bauweise erreicht wird, und der Kinderwagen außerdem bequem zu fahren ist.
Erfindungsgemäß sind die beiden Sitz- und Liegeeinsätze (10, 11) direkt oder indirekt am Untergestell (13) festgelegt, wobei der Verbindungsbereich für den ersten Sitz- und Liegeeinsatz (10) derart in einem Höhenversatz zum Verbindungsbereich des zweiten Sitz- und Liegeeinsatzes, daß sich die Endbereiche der beiden Sitz- und Liegeeinsätze (10, 11) überlappen. Durch die Überlappung wird die Länge jedes einzelnen Sitz- oder Liegeeinsatzes nicht reduziert, sondern nur die Gesamtlänge. Wenn mit dem Kinderwagen eine Stufe oder ein Bordstein überfahren werden soll, wird das notwendige Kippmoment verringert, so daß der Wagen bequemer zu fahren ist. Außerdem befindet sich die dem Kinderwagen schiebende Person näher beim zweiten Kind. Die Sitz- und Liegeeinsätze (10, 11) sind an zwei seitlich dazu stehenden, am Untergestell (13) befestigten Adaptern (12) festgelegt.

## Beschreibung

Die Erfindung betrifft einen Zwillings- oder Geschwisterkinderwagen mit einem Untergestell, an dem ein Schiebebügel angelenkt ist und an dem die Vorder- und Hinterräder gelagert und an dem außerdem zwei Sitz- und Liegeeinsätze abnehmbar festgelegt sind.

Der in Frage kommende, im folgenden Text ausschließlich als 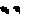 Kinderwagen" bezeichnete Zwillings- oder Geschwisterkinderwagen ist entweder für Zwillinge oder für Geschwister gedacht, sofern der Altersunterschied bei Geschwistern nur so groß ist, daß sie noch mit dem Kinderwagen gefahren werden können. Als Kinderwagen werden alle Bauformen bezeichnet.

Die in Rede stehenden Kinderwagen sind in verschiedenen Bauformen bekannt. Um zwei Kinder fahren zu können, sind Kinderwagen mit einer entsprechenden Breite bekannt, so daß die Kinder nebeneinander im Wagen liegen oder sitzen. Da jedoch mit Kinderwagen auch Türen passiert werden müssen oder der Kinderwagen aufschmalen Bürgersteigen gefahren wird, ist die Handhabung recht umständlich. Es sind deshalb Kinderwagen bekannt, deren Breite nicht größer als die eines Kinderwagens für ein Einzelkind. Die beiden Sitz- und Liegeeinsätze sind dann spiegelbildlich zueinander angeordnet, so daß ein Kind vorwärts gefahren und das andere Kind sinngemäß rückwärtsgefahren wird. Die Sitz und Liegeeinsätze sind auf gleicher Höhe angeordnet. Daraus ergibt sieh eine entsprechend lange Liegefläche. Dadurch ist die für einen Kinderwagen geforderte Sicherheit nicht mehr gegeben, so daß eine einschlägige Norm nicht mehr erfüllt wird. Ein solcher Kinderwagen neigt zum Kippen. Er müßte deshalb üblicherweise noch mit einem Gegengewicht ausgestattet sein. Damit die notwendige Sicherheit gegeben ist, könnte beispielsweise das Untergestell vergrößert werden, so daß der Abstand der Vorderräder zu den Hinterrädern größer wird. Dieses ist jedoch ungünstig, da beispielsweise bei einer Fahrt mit einem Pkw die Sitz- und Liegeeinsätze vom Untergestell abgenommen und dieses zusammengelegt wird, damit es raumsparend üblicherweise im Kofferraum transportiert werden kann. Diese Möglichkeit wäre bei einem vergrößerten Untergestell nicht mehr gegeben.

Der vorliegenden Erfindung liegt die Aufgabe zugrunde, einen Zwillings- oder Geschwisterkinderwagen der eingangs näher beschriebenen Art so zu gestalten, daß eine kompakte Bauweise erreicht und daß die Sicherheitsbestimmungen voll erfüllt werden und der außerdem bequem zu fahren ist.

Die gestellte Aufgabe wird gelöst, indem die Sitz- und Liegeeinsätze direkt oder indirekt am Untergestell festgelegt sind und daß der Verbindungsbereich für den ersten Sitz- und Liegeeinsatz derart in einem Höheversatz zum Verbindungbereich des zweiten Sitz- und Liegeeinsatzes steht, daß sich Endbereiche der beiden Sitz- und Liegeeinsätze überlappen.

Durch die sich überlappenden Endbereiche der beiden Sitz- und Liegeeinsätze wird die Länge jedes einzelnen Sitz- oder Liegeeinsatzes nicht reduziert, sondern nur die Gesamtlänge. Beim Fahren eines Kinderwagens ist es unumgänglich, daß er beispielsweise durch Druck auf den Schiebebügel gekippt wird, um eine Stufe oder einen Bordstein zu überfahren. Gegenüber den vorbekannten Ausführungen wird das notwendige 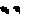 Kippmoment" verringert, so daß er bequemer zu fahren ist. Ein weiterer Vorteil ist noch darin zu sehen, daß die den Kinderwagen schiebende Person näher beim zweiten Kind ist.

Zur Befestigung der Sitz- und Liegeeinsätze können die üblichen Standardverbindungselemente verwendet werden, so daß der Zwillings- oder Geschwisterkinderwagen auch als Einzelwagen benutzt werden kann. Dazu ist es dann vorteilhaft, daß das Untergestell unverändert geblieben ist. Durch die Verwendung der Standardverbindungselemente können die Sitz- und Liegeeinsätze in jeder Position auf dem Untergestell aufgesetzt werden. Dabei ist es dann möglich, daß sich die fußseitigen oder die kopfseitigen Endbereiche überlappen oder daß ein kopfseitiger Bereich den anderen fußseitigen Bereich überlappt. Welche Position gewählt wird, ist durch die Konstruktion des Zwillings- oder Geschwisterkinderwagens nicht vorgegeben. In einer bevorzugten Ausführungsform ist vorgesehen, daß die Sitz- und Liegeeinsätze an zwei seitlich dazu stehenden, am Untergestell befestigen Adaptern festgelegt sind. Diese Adapter sind wiederum so gestaltet, daß sie in zwei Einbaulagen montiert werden können, um die zuvor beschriebenen Möglichkeiten des Versatzes und der Überlappung der Sitz- und Liegeeinsätze zu erreichen.

Zweckmäßigerweise sind die Adapter plattenförmig ausgebildet und durch sicherbare Verriegelungselemente am Untergestell festgelegt. Dadurch können sie im Bedarfsfalle vom Untergestell abgenommen werden, ohne daß dazu mechanische Verbindungselemente, wie z.B. Schrauben, gelöst werden müssen. Zweckmäßigerweise ist ein Verbindungsbereich jedes Adapters gegenüber dem anderen Verbindungsbereich nach oben versetzt. Je nach Einbaulage des Adapters steht dann der Schiebebügel abgewandte Verbindungsbereich des Adapters höher oder niedriger als der dem Schiebebügel zugewandte Verbindungsbereich. Eine Material sparende, jedoch ausreichend stabile Form für jeden Adapter wird erreicht, wenn ein Verbindungsbereich als Ausleger und der andere Verbindungsbereich als Keil ausgebildet ist. Ferner verläuft die Oberkante des zwischen den beiden Verbindungsbereichen liegenden Mittelteils jedes Adapters parallel oder annähernd parallel zur Unterkante. Zur besseren Handhabung ist noch in weiterer Ausgestaltung vorgesehen, daß die beiden Adapter zur Bildung einer Baueinheit durch wenigstens eine Quertraverse miteinander verbunden sind. Aufgrund der Konstruktion des Untergestells kann der Wagen auch nur mit einem Sitz oder Liegeeinsatz ausgerüstet werden. Er kann dann auch als Einzelwagen benutzt werden.

Anhand der beiliegenden Zeichnungen wird die Erfindung noch näher erläutert.

Es zeigen:
- Figur 1: einen erfindungsgemäßen Zwillings- oder Geschwisterkinderwagen in einer Seitenansicht und
- Figur 2: einen Adapter als Einzelheit ebenfalls in einer Seitenansicht.

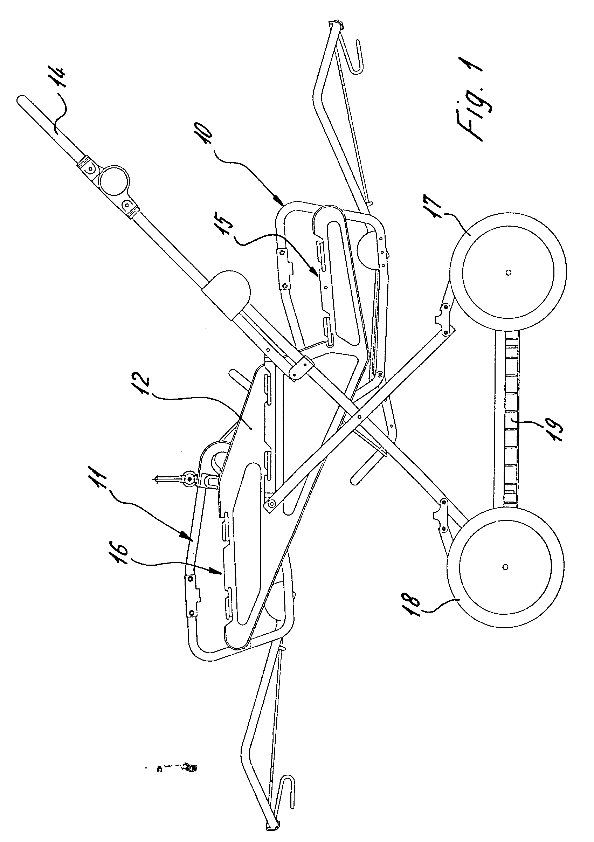

Aus Darstellungsgründen ist in der Figur 1 der Kinderwagen nicht vollständig gezeichnet, um die Verbindung der beiden Sitz- und Liegeeinheiten 10 und 11 durch zwei seitliche, plattenförmige Adapter 12 zu zeigen. Die beiden Adapter 12 sind in nicht näher dargestellter Weise durch Riegelelemente an einem Untergestell festgelegt. Im dargestellten Ausführungsbeispiel erfolgt die Verbindung zwischen den Adaptern 12 und dem Untergestell in der bisher bekannten Weise. In der gleichen bekannten Weise sind auch die Sitz- und Liegeeinsätze 10, 11 nunmehr mit den Adaptern 12 verbunden. An dem Untergestell 13 ist ebenfalls in bekannter Weise ein U-förmiger Schiebebügel 14 angelenkt. Aus der Figur 1 ergibt sich, daß die beiden Verbindungsbereich 15, 16 jedes Adapters 12 in einem Höhenversatz zueinander bestehen. Der dem Schiebebügel 14 zugewandt liegende Verbindungsbereich 15 steht niedriger als der dem Schiebebügel abgewandt liegende Verbindungsbereich 16, so daß das in dem zugeordneten Sitz- und Liegeeinsatz 11 gefahrene Kind besonders gut von der schiebenden Person beobachtet werden kann. Ferner zeigt die Figur, daß sich die füßseitigen Endbereiche der beiden Sitz- und Liegeeinsätze 10, 11 überlappen. An dem Untergestell 13 sind noch die Vorderräder 17 und die Hinterräder 18 gelagert. In nicht näher dargestellter Weise kann nach dem Abnehmen der Sitz- und Liegeeinsätze 10, 11 das Untergestell 13 in der bekannten Weise zusammengelegt werden, wobei auch der Schiebebügel 14 nach seiner Entriegelung geschwenkt werden kann. Zwischen den beiden Achsen der Vorderräder 17 und 18 ist noch eine Gepäckablage 19 montiert. Aus der Figur 1 ergibt sich, daß das Anlüpfmoment zum Schwenken des Kinderwagens um die Achse der Vorderräder 17 relativ gering ist, bedingt durch die kompakte Bauweise und sich daraus ergebende relativ geringe Länge.

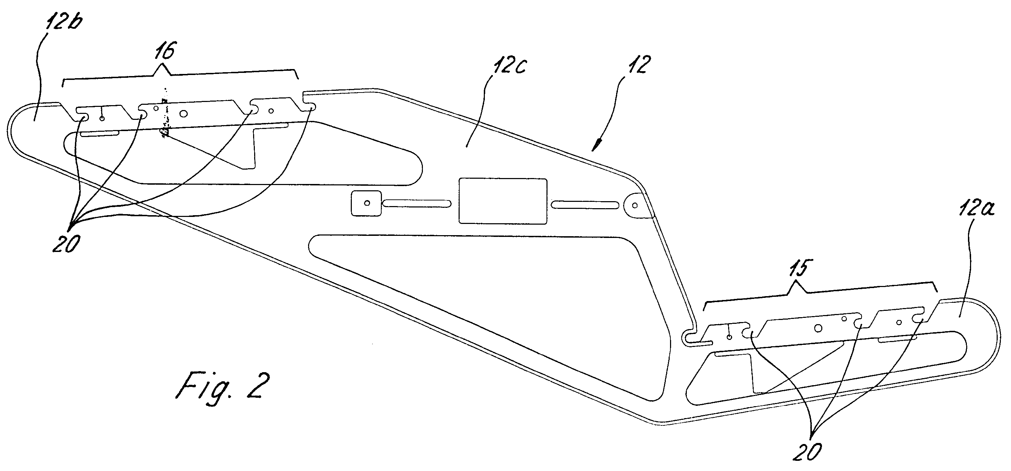

Die Figur 2 zeigt den Adapter 12 als Einzelheit. Daraus ergibt sich, daß die Verbindungsbereiche 15, 16 mit jeweils drei Taschen 20 versehen sind, um den Sitz- und Liegeeinsatz 10 bzw. 11 im Sinne eines sogenannten Schnellverschlusses festzulegen. Diese Taschen 20 entsprechen den Taschen eines normalen Untergestelles. Der Adapter 12 ist plattenförmig ausgebildet, wobei seine äußere Kontur geometrisch nicht definierbar ist. Die dem U-förmigen Schiebebügel 14 zugeordneten Verbindungsbereiche 15 der beiden Adapter 12 sind an einem Ausleger 12 a angeordnet, während die Verbindungsbereiche 16 am gegenüberliegenden, nach Art eines Keiles 12 b ausgebildeten Ende angeordnet sind. Die Verbindungsbereiche 15, 16 liegen jeweils an der oberen Seite. Die dem Schiebebügel 14 abgewandt liegenden Verbindungsbereiche 16 stehen gegenüber den Verbindungsbereichen 15 nach oben vor, wodurch der Höhenversatz der beiden Sitz- und Liegeeinsätze 10, 11 erreicht wird. Die Verbindungsbereiche 15, 16 stehen außerdem parallel und im Abstand zueinander, wobei sie leicht gegen die Horizontale in der Form geneigt sind, daß diese Bereiche zum Schiebebügel 20 hin ansteigen. Der mittlere, zwischen den Verbindungsbereichen 15, 16 liegende Bereich 12 c ist so gestaltet, daß die obere Kante parallel und im Abstand zur unteren Kante verläuft. Jeder Adapter 12 sollte aus einem ausreichend belastbaren Material gefertigt werden, welches jedoch relativ leicht ist. Bevorzugt wird ein Kunststoff verwendet, wobei jedoch auch ein Leichtmetall in Frage kommen könnte.

Entgegen der Darstellung nach der Figur 1 ist es auch möglich, daß die Sitz- und Liegeeinsätze 10 und 11 nicht in der dargestellten Form auf das Untergestell aufgesetzt werden. So könnten beispielsweise die Sitz- und Liegeeinheiten 10, 11 um eine um 180° gedrehte Position montiert werden, so daß sich die Blickrichtungen der zu fahrenden Kinder ändern. Es würden sich dann entgegen der Darstellung die kopfseitigen Endbereiche der Sitz- und Liegeeinsätze 10, 11 überlappen. Ferner wäre denkbar, daß nur einer der Sitz- oder Liegeeinsätze 10 oder 11 gedreht würde, so daß die zu fahrenden Kinder die gleiche Blickrichtung einnehmen. In diesem Falle würde sich ein endseitiger Fußteil mit einem endseitigen Kopfteil überlappen. Entgegen der gezeichneten Ausführung ist es außerdem möglich, daß der Kinderwagen auch mit nur einem Sitz- und Liegeeinsatz 10 oder 11 bestückt ist, so daß er als Einzelwagen gefahren werden kann.

Ferner sind die Adapter 12 so ausgelegt, daß sie auch in eine um 180° entgegen der gezeichneten Ausführung am Untergestell festgelegt werden können. In diesem Falle würde der dem Schiebebügel 14 abgewandte Sitz- und Liegeeinsatz 11 gegenüber dem dem Schiebebügel 14 zugeordneten Sitz- und Liegeeinsatz 11 nach unten versetzt sein. Auch in einer solchen Ausführung sind die zuvor angeschriebenen Überlappungen der Endbereiche möglich. Ferner könnten auch die Adapter 12 entfallen, wenn das Untergestell des Kinderwagens entsprechende Aufnahmen für die beiden Sitz- und Liegeeinheiten 10, 11 aufweist. Die Variationen wären jedoch dann nicht mehr möglich.

Die Erfindung ist nicht auf das dargestellte Ausführungsbeispiel beschränkt. Wesentlich ist die Ausbildung des Kinderwagens in der Weise, daß die Sitz- und Liegeeinsätze 10, 11 höhenversetzt sind und sich zur Verkürzung der Länge teilweise überlappen.

## Patentansprüche

1. Zwillings- oder Geschwisterkinderwagen mit einem Untergestell, an dem ein Schiebebügel angelenkt ist und an dem die Vorder- und Hinterräder gelagert sowie zwei Sitz- und Liegeeinsätze abnehmbar festgelegt sind, **dadurch gekennzeichnet, daß** die Sitz- und Liegeeinsätze (10, 11) direkt oder indirekt am Untergestell (13) festgelegt sind und daß der Verbindungsbereich für den ersten Sitz- und Liegeeinsatz (10) derart in einem Höhenversatz zum Verbindungsbereich des zweiten Sitz- und Liegeeinsatz steht, daß sieh Endbereiche der beiden Sitz- und Liegeeinsätze (10, 11) überlappen.

2. Zwillings- oder Geschwisterkinderwagen nach Anspruch 1, **dadurch gekennzeichnet, daß** sich die fußseitigen und/oder kopfseitigen Bereiche der beiden Sitz- und Liegeeinsätze (10, 11) überlappen.

3. Zwillings- oder Geschwisterkinderwagen nach Anspruch 1 oder 2, **dadurch gekennzeichnet, daß** die Sitz- und Liegeeinsätze (10, 11) an zwei seitlich dazu stehenden, am Untergestell (13) befestigten Adaptern (12) festgelegt sind.

4. Zwillings- oder Geschwisterkinderwagen nach Anspruch 3, **dadurch gekennzeichnet, daß** die Adapter (12) in zwei verschiedenen, um einen Winkel von 180° gedrehten Einbaulagen am Untergestell (13) festlegbar sind.

5. Zwillings- oder Geschwisterkinderwagen nach Anspruch 3, **dadurch gekennzeichnet, daß** die Adapter (12) plattenförmig ausgebildet sind und durch sicherbare Verriegelungselemente am Untergestell (13) festgelegt sind.

6. Zwillings- oder Geschwisterkinderwagen nach einem oder mehreren der vorhergehenden Ansprüche 3 bis 5, **dadurch gekennzeichnet, daß** ein Verbindungsbereich (16) jedes Adapters (12) gegenüber dem gegenüberliegenden Verbindungsbereich (15) nach oben versetzt ist.

7. Zwillings- oder Geschwisterkinderwagen nach einem oder mehreren der vorhergehenden Ansprüche 3 bis 6, **dadurch gekennzeichnet, daß** ein Endbereich jedes Adapters (12) als Ausleger (12 a) ausgebildet ist, daß die Oberkante des zwischen den Verbindungsbereichen (15, 16) liegenden Mittelteiles jedes Adapters (12) parallel oder annähernd parallel zur Unterkante steht und daß der gegenüberliegende Verbindungsbereich (16) als Keil ausgebildet ist.

8. Zwillings- oder Geschwisterkinderwagen nach einem oder mehreren der vorhergehenden Ansprüche 3 bis 7, **dadurch gekennzeichnet, daß** die beiden Adapter (12) zur Bildung einer Baueinheit durch wenigstens eine Quertraverse miteinander verbunden sind.

9. Zwillings- oder Geschwisterkinderwagen nach einem oder mehreren der vorhergehenden Ansprüche 3 bis 8, **dadurch gekennzeichnet, daß** jeder Adapter (12) aus einem Kunststoff oder aus einem Leichtmetall, wie z.B. Aluminium, gefertigt ist.

10. Zwillings- oder Geschwisterkinderwagen nach einem oder mehreren der vorhergehenden Ansprüche 1 bis 9, **dadurch gekennzeichnet, daß** das Untergestell (13) zur Benutzung als Einzelwagen mit nur einem Sitz- oder Liegeeinsatz (10 oder 11) ausrüstbar ist.
